**Europäisches Patentamt**

**European Patent Office**

**Office européen des brevets**

(19)

(11)  **EP 1 134 039 A2**

(12)  **EUROPÄISCHE PATENTANMELDUNG**

(43) Veröffentlichungstag:
**19.09.2001  Patentblatt 2001/38**

(51) Int Cl.⁷: **B06B 1/16**

(21) Anmeldenummer: **01105271.9**

(22) Anmeldetag: **05.03.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **17.03.2000  DE 10013011
12.01.2001  DE 10101260**

(71) Anmelder: **Loher Aktiengesellschaft
D-94099 Ruhstorf (DE)**

(72) Erfinder:
• **Fladerer, Thomas
4783 Wernstein am Inn (AT)**
• **Weiss, Helmut, Dipl-Ing. (FH)
94034 Passau (DE)**

(74) Vertreter: **Zinnecker, Armin, Dipl.-Ing. et al
Lorenz-Seidler-Gossel,
Widenmayerstrasse 23
80538 München (DE)**

(54)  **Rüttelvorrichtung**

(57)  Es wird eine vereinfachte Rüttelvorrichtung vorgeschlagen, bei der ein Synchron-Torque-Motor zum Erzeugen der Rüttelbewegung dient.

EP 1 134 039 A2

**Beschreibung**

Die Erfindung betrifft eine Rüttelvorrichtung (einen Rüttler), beispielsweise einen Gießereirüttler.

Für Rüttler werden bisher z.B. Unwuchtmotoren eingesetzt. Dies bringt allerdings einen großen mechanischen Aufwand mit sich. Es sind aufwendige Rütteltischkonstruktionen erforderlich. Der Antriebsmotor ist einer großen mechanischen Belastung ausgesetzt.

Aufgabe der Erfindung ist es, einen vereinfachten Antrieb für eine Rüttelvorrichtung vorzuschlagen.

Erfindungsgemäß wird diese Aufgabe durch eine Synchron-Torque-Motor (STM) zum Erzeugen der Rüttelbewegung gelöst. Der STM kann mit blockiertem Läufer betrieben werden, ohne daß eine unzulässige Erwärmung auftritt oder der Motor zerstört wird. Bei Betrieb mit blockiertem Läufer entwickelt der STM ein pendelndes Drehmoment mit der doppelten Speisefrequenz. Dieses Drehmoment kann als Rüttelmoment direkt an der Motorwelle abgenommen werden. Der Läufer wird dazu in geeigneter Weise eingespannt oder blockiert, um ein optimales Rüttelverhalten zu erzielen. Bei Speisung über einen Frequenzumrichter kann die Rüttelfrequenz stufenlos geregelt werden. Eine Speisung kann jedoch nicht nur über ein Drehstromnetz oder über einen Frequenzumrichter, sondern auch über eine gegebenenfalls in geeigneter Weise getaktete Gleichspannung erfolgen. Das Rüttelmoment kann über die Motoreingangsspannung (Sättigung) in der Größe variiert werden. Die Amplitude der Rüttelbewegung kann mechanisch über die Länge des Hebelarms eingestellt werden. Durch die Erfindung wird ein einfacher Aufbau von Rüttelvorrichtungen ohne drehende Teile möglich.

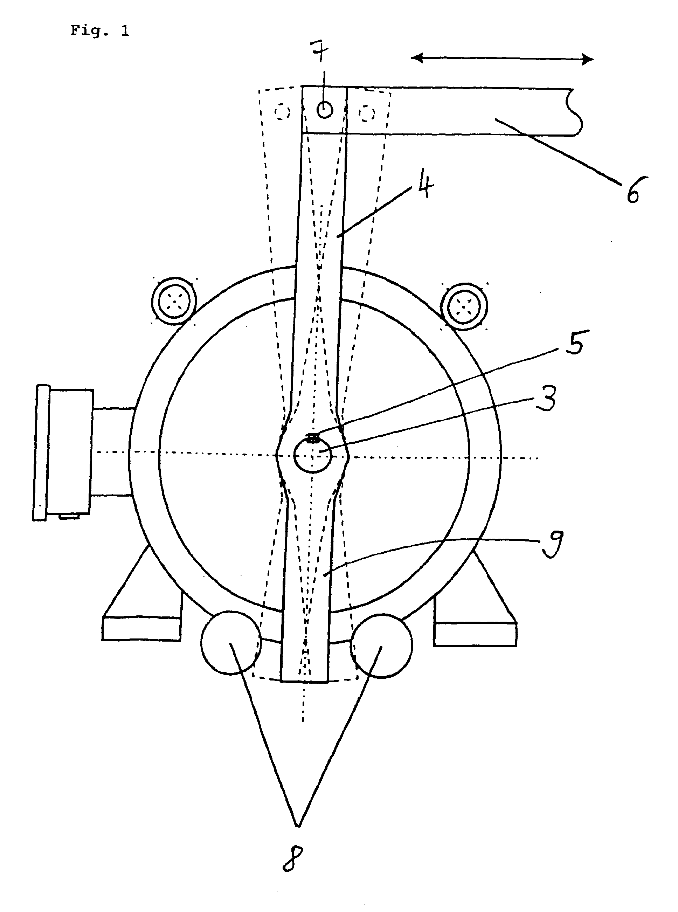

Fig. 1 zeigt die Prinzipskizze einer Rüttlervorrichtung mit Antrieb durch einen Synchron-Torque-Motor. Der Synchron-Torque-Motor (STM) gehört zur Gruppe der Reluktanzmotoren. Reluktanzmotoren sind Sonderbauformen von Synchronmaschinen. Dem grundsätzlichen Aufbau nach bestehen sie aus einem bewickelten Stator und einem wicklungslosen Läufer. Die Drehmoment bildenden Kräfte beruhen auf der Änderung des magnetischen Leitwertes in Abhängigkeit von der Rotorstellung.

Der Synchron-Torque-Motor ist dadurch gekennzeichnet, daß der Rotor mit einer Synchrondrehzahl umläuft, welche von der Drehfeldgeschwindigkeit im Stator verschieden ist. Hierdurch findet gleichsam eine magnetische Drehzahlübersetzung statt. Diese Übersetzung wird durch die Anzahl der Flußführungselemente in Stator und Rotor bestimmt, wobei unter einem Flußführungselement eine spezielle Ausprägung der Zahnköpfe in Stator und Rotor zu verstehen ist. Der Läufer führt keinen Strom, hat daher weder Wicklung noch Kurzschlußring. Er sieht etwa wie ein Zahnrad aus, dessen Breite der Eisenlänge entspricht. Der Hauptfluß "krallt" sich in diese "Flussleiste" ein und erzeugt das Drehmoment nach dem Reluktanzprinzip.

Im Gegensatz zu den bekannten "geschalteten" Reluktanzmaschinen ist der Stator mit einer konventionellen verketteten Dreiphasenwicklung ausgeführt, wie sie standardmäßig in Asynchronmotoren zur Anwendung kommt. Der geblechte, wicklungslose Rotor hat eine ausgeprägte Zahnstruktur. Die Ableitung der Synchron-Torque-Maschine aus der Asynchronmaschine schafft die Voraussetzungen für besonders kostengünstige Antriebslösungen.

Ein Synchron-Torque-Motor (STM) ist in Aufbau und Wirkungsweise bezüglich Motor- und Generatorbetrieb in der DE-PS 197 43 380 beschrieben. Hierauf wird hiermit ausdrücklich Bezug genommen. Nachfolgend wird eine zusammenfassende, vereinfachte Beschreibung von Aufbau und Wirkungsweise dieses besonderen Motors gegeben.

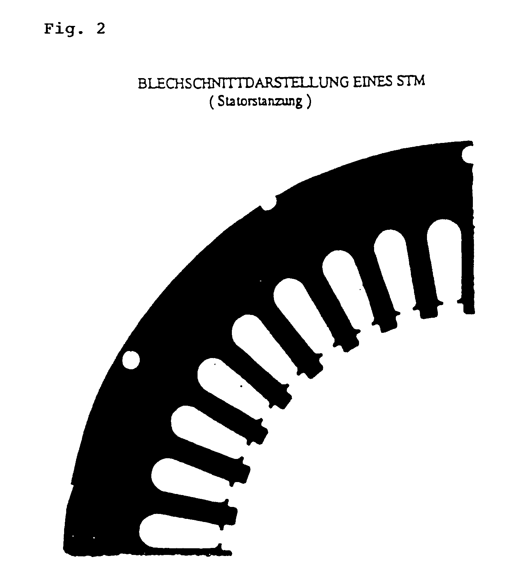

Der Synchron-Torque-Motor (STM) ist eine langsamlaufende Synchronmaschine mit hohem Drehmoment. Er zeichnet sich durch einfachen Aufbau aus, läßt sehr hohe "Polzahlen", also kleine Drehzahlen zu, erreicht einen vergleichsweise hohen Wirkungsgrad und erzielt einen günstigen Leistungspreis. Der STM arbeitet nach dem Reluktanzprinzip und ist daher im Gegensatz zu den sonst üblichen Antrieben eine Sonderform der Synchronmaschine. Dem grundsätzlichen Aufbau nach besteht er aus einem Stator, welcher mit einer konventionellen, verketteten Drehstromwicklung versehen ist, sowie aus einem geblechten, wicklungslosen Läufer. Die drehmomentbildenden Kräfte beruhen auf der Änderung des magnetischen Leitwertes in Abhängigkeit von der Rotorstellung. Das Besondere im Vergleich zur üblichen Reluktanzmaschine ist, daß der Rotor mit einer Synchrondrehzahl umläuft, welche zur Drehfeldgeschwindigkeit im Stator unterschiedlich ist. Es findet gleichsam eine "magnetische Drehzahlübersetzung" statt. Diese Übersetzung wird durch das Verhältnis aus der Anzahl der Statorflussleisten zur Anzahl der Rotorflussleisten bestimmt. Unter "Flussleisten" ist eine spezielle Ausprägung zur Zahnköpfe in Stator und Rotor zu verstehen, die aus Fig. 2 ersichtlich ist.

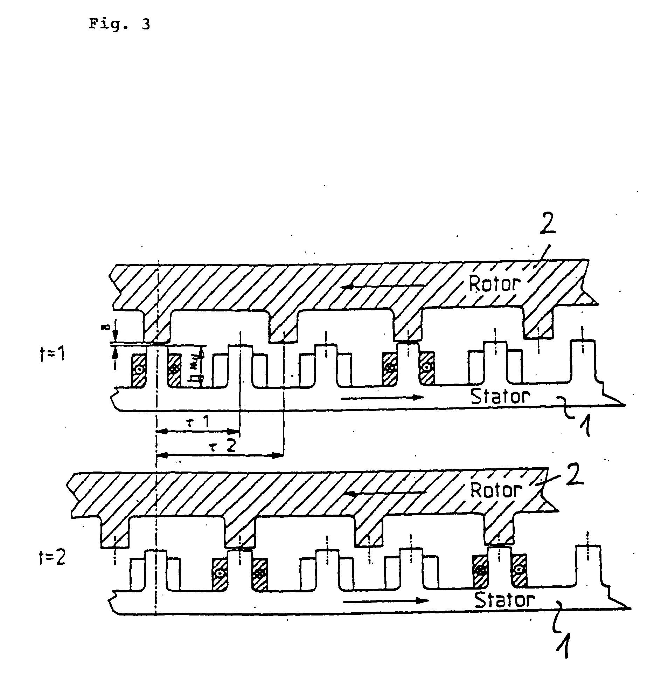

Wie aus Fig. 3 ersichtlich, sind der Stator 1 und der Rotor 2 eines Synchron-Torque-Motors mit unterschiedlicher Zähnezahl und damit voneinander abweichender Nutteilung $\tau_1$ und $\tau_2$ ausgeführt. Der Einfachheit halber sei eine Phase der Ständerdrehstromwicklung auf zwei Pole konzentriert und alleine stromführend (Zeitpunkt t = 1; in Fig. 3 oben dargestellt). Die hierzu dargestellte Läuferstellung ist stabil, es wirken keine Drehmomente. Mit Weiterrücken des Drehfeldes zum nächsten Pol (Zeitpunkt t = 2; in Fig. 3 unten dargestellt) rastet der Rotor in eine neue stabile Lage ein. Man kann anhand dieses Modells feststellen, daß bei einem Fortschalten des Ständerfeldes um die Polteilung $\tau_1$ nach rechts der Läufer um die Differenz $\tau_2 - \tau_1$ links dreht. Die Läuferdrehzahl hängt somit von der Drehfeldgeschwindigkeit des erregenden Ständerfeldes und von der Anzahl der Stator- und Läuferzähne ab. Je nach Zahnverhältnis der Stator- und Rotorzähne dreht der Rotor mit

$n_{Rotor}$ mit oder gegen das Statordrehfeld (siehe nachfolgende Gleichung (1)):

$$n_{Rotor} = \frac{N_2 - N_1}{N_2} * \eta_{syn}, Stator \qquad (1)$$

mit:

| | |
|---|---|
| $n_{Rotor}$ = | Rotordrehzahl |
| $n_{syn,Stator}$ = | Drehzahl des Statordrehfeldes |
| $N_1$ = | Anzahl der Statorzähne |
| $N_2$ = | Anzahl der Rotorzähne |

In einem praktisch ausgeführten Beispiel der in Fig. 3 gezeigten Maschine (Baugröße 71) ergibt sich bei einer vier-poligen Drehstromwicklung am 50 Hz Netz bei $N_1$ = 36 und $N_2$ = 32 eine Rotordrehzahl von 187,5 min$^{-1}$. Dies würde, läßt man den Einsatz eines Getriebes außer acht, einer mit 32 Polen ausgeführten Synchronmaschine entsprechen.

Wie die klassische Reluktanzmaschine verlangt auch der STM im Motorbetrieb am Netz eine Anlasshilfe, zeigt aber ein unvergleichlich stabileres Betriebsverhalten, da er eine erhebliche Drehmomentreserve bis zum "Aussertrittfallen" hat. Bei geregelten Antrieben wird die Funktion der Anlasshilfe vom Frequenzumrichter automatisch übernommen. Der bevorzugte Drehzahlbereich dieser Maschinen liegt unter 600 1/min. Die Maschine läuft synchron, hat daher vernachlässigbar kleine Läuferverluste. Im Vergleich zur Asynchronmaschine, welche bei ähnlich niedriger Drehzahl mit kleiner Frequenz bzw. hoher Polzahl betrieben wird, hat der Synchron-Torque-Motor

- ein höheres Dauerdrehmoment,
- eine günstigere Verlustbilanz (keine Läuferverluste!),
- einen höheren Wirkungsgrad und
- eine geringere Erwärmung (z.B. kann die sonst oft nötige Fremdbelüftung entfallen).

Selbst bei kleiner Motorbaugröße sind hohe (fiktive) Polzahlen möglich (z.B.: BG 71, 2p=40, das heißt, die Drehzahl beträgt bei 50 Hz-Speisung 150 1/min.). Der Motor ist preiswert (vergleichbar mit einer Asynchronmaschine gleicher Achshöhe). Bei blockiertem Läufer tritt keine Zerstörung ein. Der Leistungsfaktor cos$\phi$ ist klein, daraus ergibt sich ein hoher Blindstromanteil.

Aufgrund der günstigen Verlustbilanz kann der STM bei vergleichbaren Kühlverhältnissen ein Dauerdrehmoment abgeben, welches etwa 30-40% über dem einer adäquaten Asynchronmaschine liegt. Die kurzzeitige Drehmomentüberlastbarkeit kann in etwa mit dem Kippmoment der adäquaten Asynchronmaschine angegeben werden.

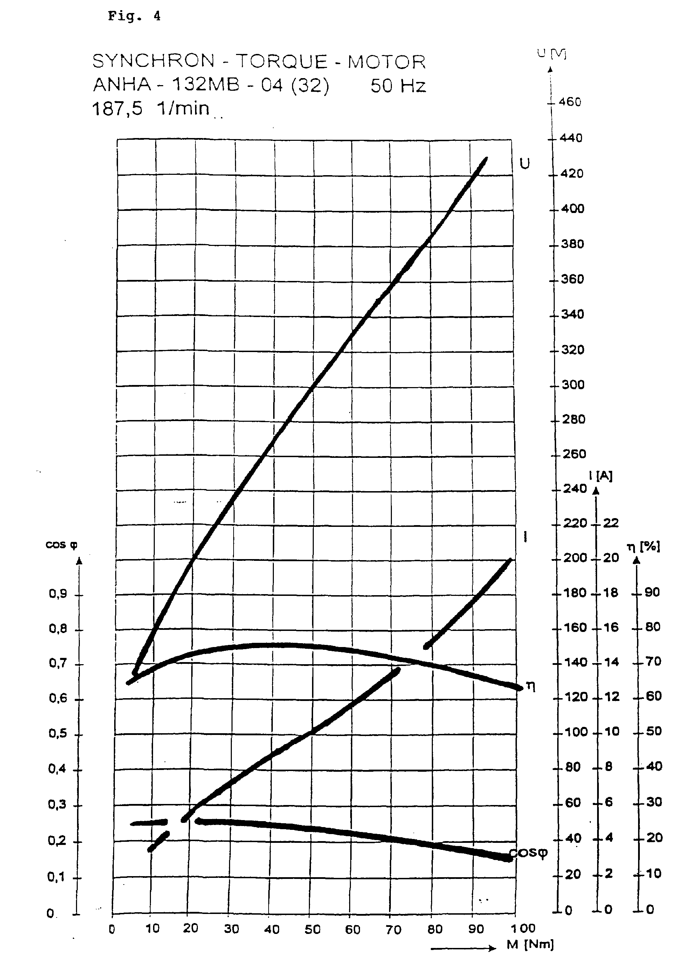

Die Kenngrößen eines gebauten und typengeprüften STM der Baugröße 132 sind aus Fig. 4 ersichtlich mit U=Motorspannung (V), J= Motorstrom (A), $\eta$=Wirkungsgrad (%), cos$\phi$=Leistungsfaktor (-), M=Drehmoment (Nm), Frequenz=50 (Hz), Drehzahl=187,5 (1/min), Polzahl=32 (bei 4poliger Statorwicklung).

Eine weitere Eigenart des Synchron-Torque-Motors ist, daß die Welle um einen bestimmten Drehwinkel nach rechts und links von einer Mittelstellung pendelt, wenn sie z.B. durch eine Arretiervorrichtung gehindert wird, die übliche Drehbewegung auszuführen. Diese Pendelbewegung bei blockiertem Rotor erfolgt unabhängig davon, ob der Motor über eine Drehstromversorgung (z.B. Netzbetrieb oder Umrichterbetrieb) oder über eine (in geeigneter Weise getaktete) Gleichspannungsquelle betrieben wird. Auf die genannte Pendelbewegung bei blockiertem Rotor bezieht sich die vorliegende Erfindung.

Vorteilhafte Weiterbildungen der Erfindung sind in den Unteransprüchen beschrieben.

Vorzugsweise ist eine Mechanik zum Abnehmen des Rüttelmoments vorhanden. Es ist allerdings auch möglich, das Rüttelmoment direkt an der Motorwelle abzunehmen.

Eine weitere vorteilhafte Weiterbildung ist gekennzeichnet durch eine Blockiereinrichtung zum Blokkieren des Synchron-Torque-Motors. Demnach ist es möglich, den Synchron-Torque-Motor zur Erzeugung der Rüttelbewegung in geeigneter Weise zu blockieren.

Die Speisung des Synchron-Torque-Motors kann durch ein Drehstromnetz erfolgen. Vorteilhaft ist es, einen Frequenzumrichter vorzusehen, über den die Speisung des Synchron-Torque-Motors erfolgt.

Eine weitere vorteilhafte Weiterbildung ist gekennzeichnet durch eine Regeleinrichtung zum vorzugsweise stufenlosen Regeln der Frequenz der Rüttelbewegung. Die Regeleinrichtung kann einen Frequenzumrichter umfassen. Dementsprechend kann die Frequenz der Rüttelbewegung über einen Frequenzumrichter vorzugsweise stufenlos geregelt werden.

In einer weiteren Ausgestaltungsvariante erfolgt die Speisung des Synchron-Torque-Motors über eine gegebenenfalls in geeigneter Weise getaktete Gleichspannung zur Erzeugung des Rüttelmoments.

Nach einer weiteren vorteilhaften Weiterbildung ist eine Regeleinrichtung vorgesehen, durch die die Größe des Rüttelmoments durch die Motorspannung (Sättigung) geregelt wird. Eine derartige Regeleinrichtung kann in allen oben beschriebenen Fällen der Spannungsversorgung verwendet werden.

Eine weitere vorteilhafte Weiterbildung ist gekennzeichnet durch eine Einrichtung zum Variieren der Amplitude der Rüttelbewegung. Vorteilhaft ist es, wenn die Länge des das Moment aufnehmenden Hebels und/oder die Einstellung einer Läuferblockiervorrichtung veränderbar ist.

Die Erfindung betrifft ferner die Verwendung eines Synchron-Torque-Motors in einer Rüttelvorrichtung zum Erzeugen der Rüttelbewegung. Hierbei können die oben beschriebenen vorteilhaften Weiterbildungen vorgesehen werden.

Ausführungsbeispiele der Erfindung werden nachstehend anhand der beigefügten Zeichnung im einzelnen erläutert. In der Zeichnung zeigt

Fig. 1 — eine Prinzipskizze einer Rüttlervorrichtung mit Antrieb durch einen Synchron-Torque-Motor (STM),

Fig. 2 — die Ausprägung der Zahnköpfe in Stator und Rotor,

Fig. 3 — eine lineare Darstellung des Stators und des Rotors eines Synchron-Torque-Motors,

Fig. 4 — die Kenngrößen eines Synchron-Torque-Motors,

Fig. 5 bis 11 — den STM in verschiedenen, schematisch dargestellten Betriebszuständen und

Fig. 12 — den Drehmomentverlauf des STM.

Fig. 1 zeigt eine vorteilhafte Ausbildung eines Rüttlerantriebs durch einen Synchron-Torque-Motor. Auf der Welle 3 des STM sitzt ein Hebelarm 4, der durch eine Passfeder 5 mit der Welle 3 drehfest verbunden ist. An das obere Ende des Hebelarms 4 ist eine Schubstange 6 angelenkt 7, die das Rüttelmoment auf den zu rüttelnden Anlagenteil, Gegenstand etc. überträgt. Unterhalb der Welle 3 sind gehäusefeste Anschläge 8 vorgesehen, durch die der Hub des Hebelarms 4 begrenzt wird. Zu diesem Zweck ist der Hebelarm 4 in der aus Fig. 1 ersichtlichen Weise mit einer nach unten weisenden Verlängerung 9 versehen. Durch den Hebelarm 4, das Gelenk 7, die Schubstange 6 und die Verlängerung 9 wird eine Mechanik zum Abnehmen des Rüttelmoments gebildet. Die Anschläge 8 bilden eine Blockiereinrichtung zum Blockieren des STM.

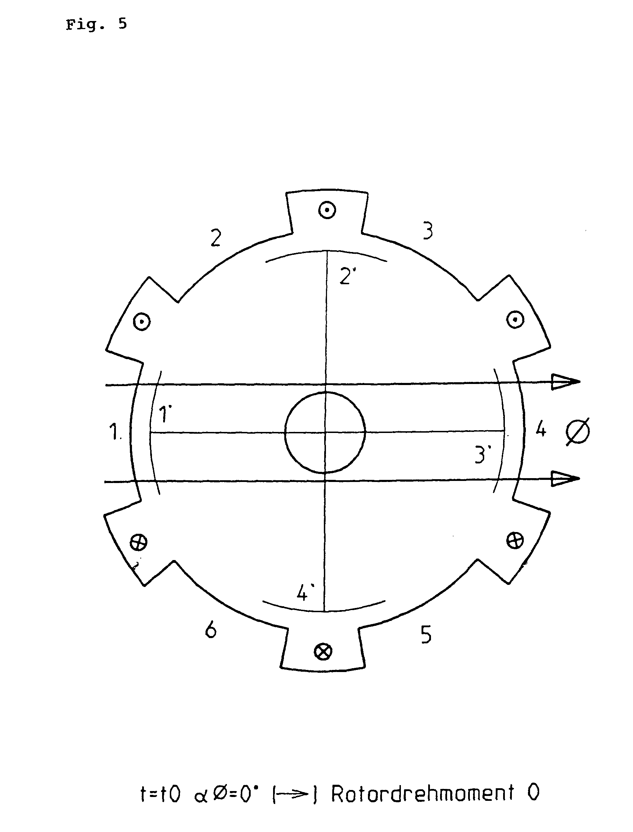

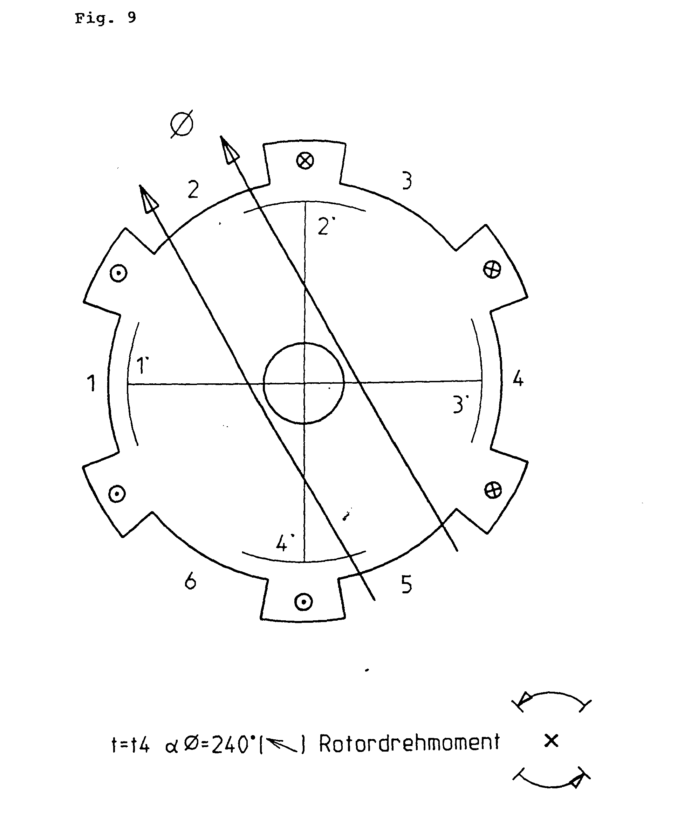

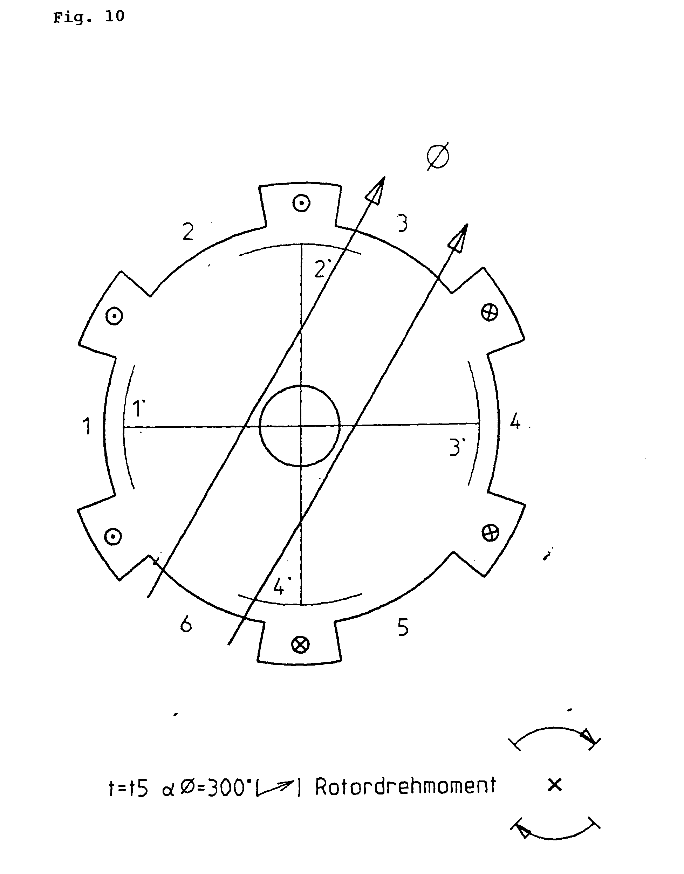

In den Abbildungen Fig. 5 bis Fig. 12 sind Fuktionsskizzen des STM bei blockiertem Rotor und der daraus resultierende Momentverlauf für eine Rüttleranwendung dargestellt.

Ausgehend von einer als Mittelstellung bezeichneten Anfangsstellung von Rotor und Welle besteht zunächst das Bestreben der Rotorzähne, den von Statorzahn zu Statorzahn fortschreitenden magnetischen Kraftlinien zu folgen. Wird nun einer der beiden Anschläge 8, von Hebelarm 9 in der Prinzipskizze Fig. 1 erreicht, wird der Rotor am Weiterlaufen gehindert. Der Motor wird also bewußt zum "Kippen" gebracht.

Das größte, während des Kippens auftretende Drehmoment ist vergleichsweise das bei den Synchronmaschinen als "Aussertrittfallmoment" bekannte Drehmoment.

Bei optimiertem Verhältnis zwischen der Anzahl der Flussleisten in Stator und Rotor findet nun nach dem "Ereignis" des Kippens eine Rückholung in Richtung Mittelstellung und darüber hinaus zur gegenüberliegenden Arretierung 8 statt.

Die Abbildungen Fig. 5 bis Fig. 11 verdeutlichen diese Vorgänge am Beispiel eines Synchron-Torque-Motors. Im vorliegenden Beispiel handelt es sich um einen Synchron-Torque-Motor mit zweipoligem Stator mit 6 Statorflussleisten ("Zähnen") und mit einem Rotor mit 4 Rotorflussleisten ("Zähnen"):

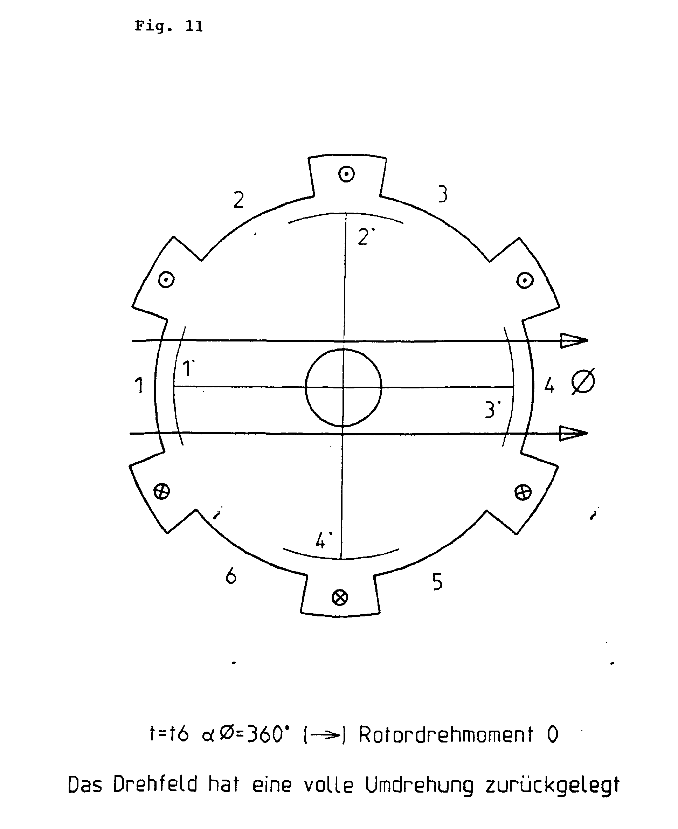

Ausgehend vom Zeitpunkt $t=t_0$ (entspricht 0°) (Fig. 5) bis zum Zeitpunkt $t=t_6$ (entspricht 360°) (Fig. 11), also während eines Umlaufes des Statordrehfeldes, erfährt der Rotor zwei Auslenkungen gegen den Uhrzeigersinn und zwei Auslenkungen im Uhrzeigersinn. Die Rüttelfrequenz beträgt somit am Beispiel der 2-poligen Maschine je Umlauf des Drehfeldes 2 Hz, oder anders ausgedrückt: Die Rüttelfrequenz ist gleich der doppelten Speisefrequenz. Das gilt nun nicht nur für die zweipolige Maschine sondern generell für alle Polzahlen. Die Kräfte resultieren aus dem Reluktanzverhalten.

Bei $t=t_0$ (Fig. 5) wird der Magnetfluß über Zähne geführt, die in Stator und Rotor deckungsgleich liegen. Es gibt somit also keine Kraftwirkung auf Rotor und Welle. Im Statorzahn 1 treten die magnetischen Kraftlinien aus und finden den Weg über die Rotorzähne 1' und 3' zum Statorzahn 4.

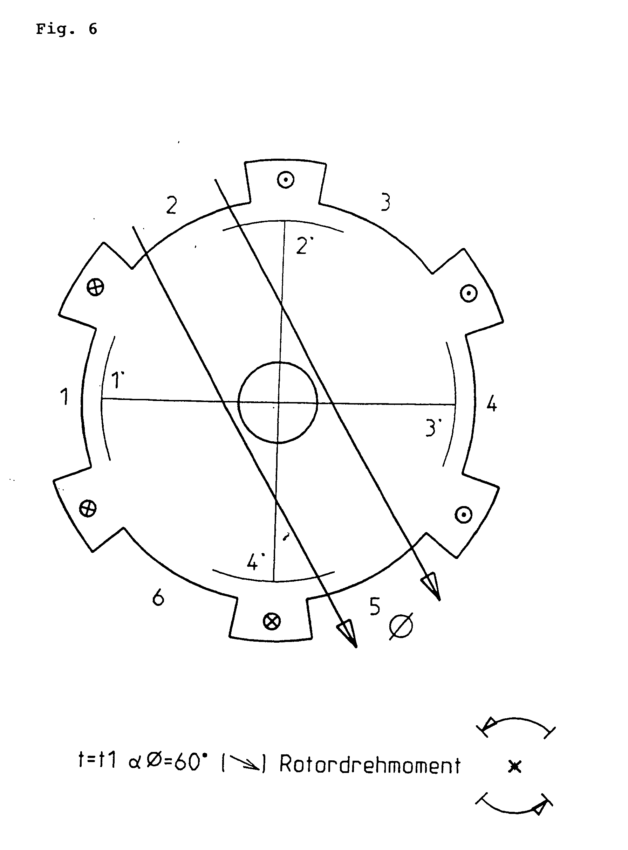

Anders z.B. bei $t=t_1$ (Fig. 6): Die magnetischen Kraftlinien, welche aus dem Statorzahn 2 austreten, sind bestrebt, den Rotorzahn 2' in Richtung Statorzahn 2 zu ziehen um so den kürzesten Weg über Rotorzahn 4' zu Statorzahn 5 nehmen zu können. Es entsteht also ein Drehmoment an der Welle gegen den Uhrzeigersinn. Aufgrund der Arretierung kann die Welle aber keine Drehung ausführen. Sie gibt bis zum Anlaufen an die Arretierung das Reluktanzmoment als Zugkraft an die Schubstange 6 in der Prinzipskizze (Fig. 1) ab.

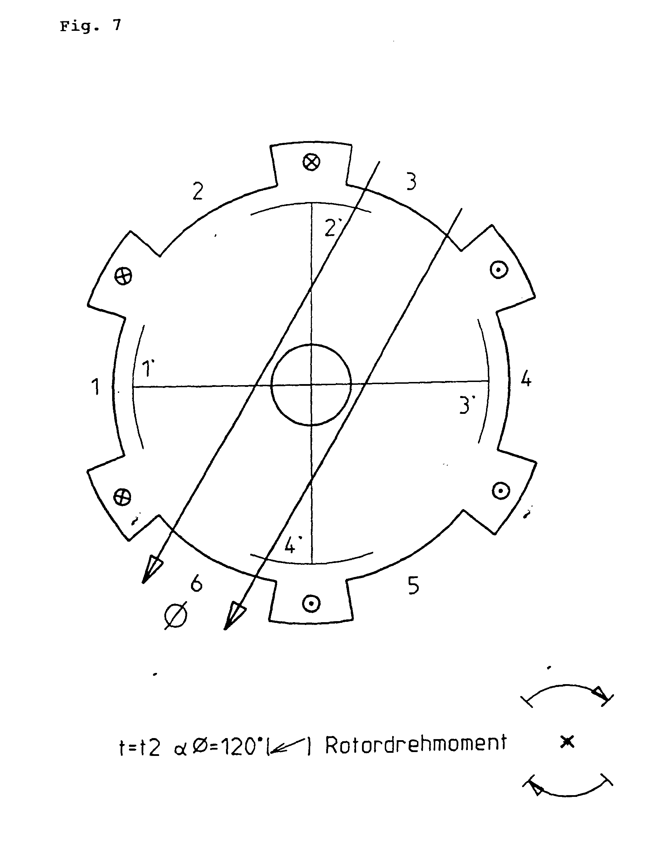

Zur Zeit $t=t_2$ (Fig. 7) führen die Statorzähne 3 und 6 den Hauptfluss. Die Reluktanzkräfte sind jetzt bestrebt, die Rotorzähne 2' und 4' in Deckung mit den Statorzähnen 3 und 6 bringen, es entsteht also ein Drehmoment im Uhrzeigersinn und, bezogen auf die Prinzipskizze, eine Schubkraft an der Schubstange 6 in der Prinzipskizze Fig. 1.

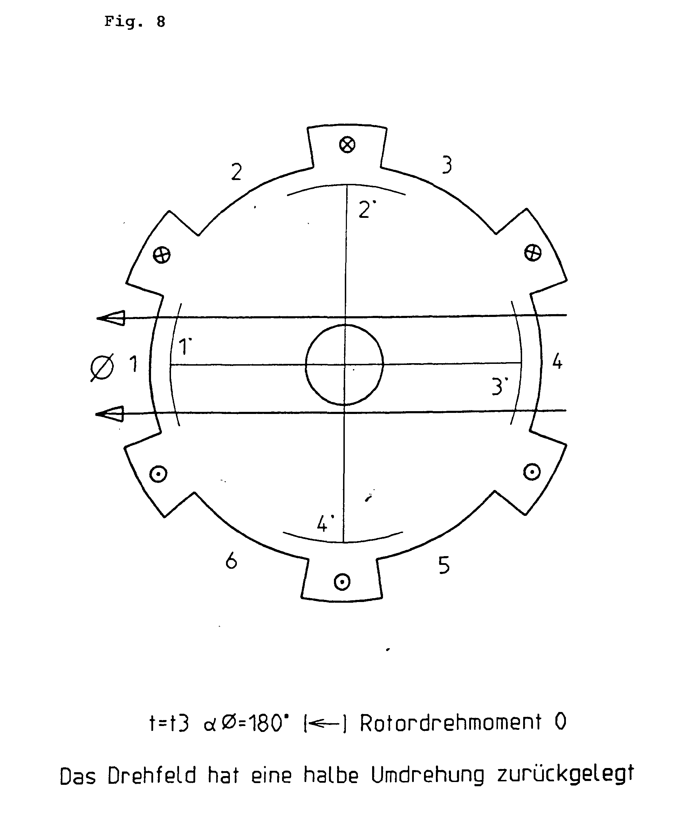

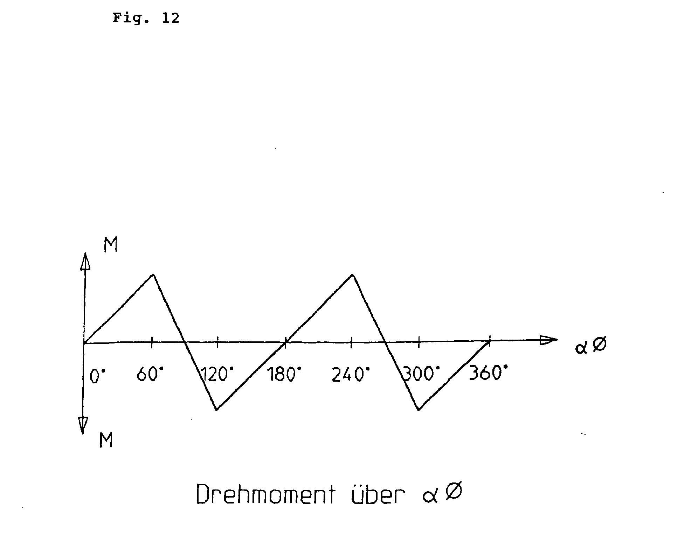

Der weitere Zeitverlauf ist in den Abbildungen Fig. 8 bis Fig. 11 dargestellt. Durch den oben beschriebenen Wechsel zwischen Schub- und Zug-Kräften entstehen also Rüttelkräfte. Der prinzipielle Verlauf dieser Rüttelkräfte ist für das oben beschriebene Beispiel als Drehmomentverlauf in Fig. 12 gezeigt. Die Größe bzw. Wirkung der Rüttelkräfte hängt selbstverständlich auch vom Resonanzverhalten der Gesamtanordnung ab. So kann z.B. durch Änderung der Motor-Speisefrequenz über einen Frequenzumrichter das Gesamtsystem auf Eigenresonanz der zu rüttelnden Systemanordnung (z. B. masseabhängig) eingestellt werden. Auch eine Hubverstellung über Veränderung des Abstandes der beiden Anschläge 8 in der Prinzipskizze haben durch die Veränderung des Verdrehwinkels Einfluss auf die Optimierung des Rüttlers.

**Patentansprüche**

1. Rüttelvorrichtung, **gekennzeichnet durch** einen Synchron-Torque-Motor zum Erzeugen der Rüttelbewegung.

2. Rüttelvorrichtung nach Anspruch 1, **gekennzeichnet durch** eine Mechanik (4, 6, 7, 9) zum Abnehmen des Rüttelmoments.

3. Rüttelvorrichtung nach Anspruch 1 oder 2, **gekennzeichnet durch** eine Blokkiereinrichtung (8) zum Blockieren des Synchron-Torque-Motors.

4. Rüttelvorrichtung nach einem der vorhergehenden Ansprüche, **dadurch gekennzeichnet, daß** die Speisung des Synchron-Torque-Motors durch eine Gleichspannungsquelle erfolgt, die gegebenenfalls in geeigneter Weise getaktet wird.

5. Rüttelvorrichtung nach einem der vorhergehenden Ansprüche, **dadurch gekennzeichnet, daß** die Speisung des Synchron-Torque-Motors durch ein Drehstromnetz erfolgt.

6. Rüttelvorrichtung nach einem der vorhergehenden Ansprüche, **gekennzeichnet durch** einen Frequenzumrichter.

7. Rüttelvorrichtung nach einem der vorhergehenden Ansprüche, **gekennzeichnet durch** eine Regeleinrichtung zum vorzugsweise stufenlosen Regeln der Frequenz der Rüttelbewegung.

8. Rüttelvorrichtung nach Anspruch 7, **dadurch gekennzeichnet, daß** die Regeleinrichtung einen Frequenzumrichter umfaßt.

9. Rüttelvorrichtung nach einem der vorhergehenden Ansprüche, **gekennzeichnet durch** eine Regeleinrichtung zum Regeln der Größe des Rüttelmoments durch die Motorspannung (Sättigung).

10. Rüttelvorrichtung nach einem der vorhergehenden Ansprüche, **gekennzeichnet durch** eine Einrichtung zum Variieren der Amplitude der Rüttelbewegung.

11. Rüttelvorrichtung nach Anspruch 10, **dadurch gekennzeichnet, daß** die Länge des das Moment aufnehmenden Hebels und/oder die Einstellung einer Läuferblockiereinrichtung veränderbar ist.

12. Verwendung eines Synchron-Torque-Motors in einer Rüttelvorrichtung zum Erzeugen der Rüttelbewegung.

**Fig. 1**

Fig. 2

BLECHSCHNITTDARSTELLUNG EINES STM
( Statorstanzung )

Fig. 3

**Fig. 4**

SYNCHRON - TORQUE - MOTOR
ANHA - 132MB - 04 (32)    50 Hz
187,5  1/min

Fig. 5

t=t0 αØ=0° |—→| Rotordrehmoment 0

Fig. 6

t=t1 α∅=60° |↘| Rotordrehmoment      ✕

Fig. 7

t=t2 $\alpha\varnothing$=120° |↙| Rotordrehmoment

Fig. 8

t=t3 αØ=180° |←—| Rotordrehmoment 0

Das Drehfeld hat eine halbe Umdrehung zurückgelegt

Fig. 9

t=t4 α∅=240°[↖] Rotordrehmoment     ✕

Fig. 10

t=t5  α∅=300° [↗] Rotordrehmoment   ×

Fig. 11

t=t6 α∅=360° |—→| Rotordrehmoment 0

Das Drehfeld hat eine volle Umdrehung zurückgelegt

Fig. 12

Drehmoment über α Ø